# EUROPÄISCHE PATENTSCHRIFT

(11) **EP 3 394 877 B1**
(45) Veröffentlichungstag und Bekanntmachung des Hinweises auf die Patenterteilung: **19.08.2020**
(21) Anmeldenummer: 15816189.3
(22) Anmeldetag: 22.12.2015
(51) Int. Cl.: H01J 49/16, G02F 1/35

(54) **MASSENSPEKTROMETER MIT LASERDESORPTIONS-IONENQUELLE UND LASERSYSTEM LANGER LEBENSDAUER**
MASS SPECTROMETER WITH A LASER DESORPTION ION SOURCE, AND LASER SYSTEM WITH A LONG SERVICE LIFE
SPECTROMÈTRE DE MASSE ÉQUIPÉ D'UNE SOURCE D'IONS À DÉSORPTION LASER ET SYSTÈME LASER À LONGUE DURÉE DE VIE

(43) Veröffentlichungstag der Anmeldung: 31.10.2018
(73) Patentinhaber: Bruker Daltonik GmbH, 28359 Bremen (DE)
(72) Erfinder: HAASE, Andreas, 28325 Bremen (DE)
(74) Vertreter: Boßmeyer, Jens
(86) Internationale Anmeldenummer: PCT/EP2015/080926
(87) Internationale Veröffentlichungsnummer: WO 2017/108091

(56) Entgegenhaltungen:
- DE-A1-102011 112 649
- US-B1- 6 249 371
- US-B2- 7 460 569
- US-B2- 8 885 246
- Dr. Rüdiger Paschotta: "Encyclopedia of Laser Physics and Technology - frequency tripling, third-harmonic generation, nonlinear frequency conversion, crystal lifetime, degradation", , 27 June 2015 (2015-06-27), XP055671181, Retrieved from the Internet: URL:https://web.archive.org/web/2015062720 2007/http://www.rp-photonics.com/frequency _tripling.html [retrieved on 2020-02-24]

## Beschreibung

Die Erfindung betrifft ein Massenspektrometer mit Laserdesorptions-Ionenquelle, welche die Analytmoleküle einer Probe mittels Laserdesorption von einem Probenträger ionisiert, insbesondere mittels matrix-unterstützter Laserdesorption. Das zugehörige Lasersystem weist eine verlängerte Lebensdauer auf.

### Stand der Technik

In der Massenspektrometrie von biologischen Makromolekülen haben sich in den letzten zwanzig Jahren zwei Ionisierungsarten durchgesetzt: die Ionisierung durch matrixunterstützte Laserdesorption (MALDI, Abkürzung für "Matrix Assisted Laser Desorption and Ionization") und das Elektrosprühen (ESI, Abkürzung für "Electrospray Ionization"). Die zu analysierenden biologischen Makromoleküle werden im Folgenden als Analytmoleküle bezeichnet. Beim MALDI-Verfahren sind die Analytmoleküle in der Regel auf der Oberfläche eines Probenträgers in einer festen, polykristallinen Matrixschicht präpariert und werden ganz überwiegend einfach geladen ionisiert, während sie beim ESI-Verfahren in einer Flüssigkeit gelöst sind und vielfach geladen ionisiert werden. Beide Verfahren ermöglichten es erstmals, biologische Makromoleküle für Untersuchungen in der Genomik, Proteomik und Metabolomik massenspektrometrisch zu analysieren; ihre Erfinder, John B. Fenn und Koichi Tanaka, wurden im Jahr 2002 mit dem Nobelpreis für Chemie geehrt.

Die Ionisierung durch matrixunterstützte Laserdesorption ist in den letzten Jahren durch eine Umstellung von Stickstoff-Lasern auf Festkörper-UV-Laser mit höherer Lebensdauer und insbesondere durch eine Strahlerzeugung mit örtlich moduliertem Strahlprofil für eine erhöhte Ionenausbeute nachhaltig verbessert worden. Das Verfahren der Strahlerzeugung und die entsprechenden Lasersysteme sind in den äquivalenten Dokumenten DE 10 2004 044 196 A1, GB 2 421 352 B und US 7,235,781 B2 (A. Haase et al., 2004) beschrieben und unter der Bezeichnung "smartbeam" bekannt.

Dem "smartbeam" liegt die Erkenntnis zugrunde, dass die Ionisierungsrate des Probenmaterials sehr stark ansteigt, wenn man die Laserspots sehr klein macht, bis herunter in den niedrigen Mikrometerbereich. Allerdings werden in diesen kleinen Laserspots nur relativ wenige Ionen gebildet, so dass es zweckmäßig ist, gleichzeitig mehrere Spots zu erzeugen, also ein Muster von Laserspots zu verwenden.

In Flugzeitmassenspektrometern mit einer Ionisierung der Proben durch matrixunterstützte Laserdesorption (MALDI) wird der Laserstrahl in der Regel durch fest justierte Linsen und Spiegel so auf eine Probe auf einem Probenträger fokussiert, dass der Laserspot mit gewünschtem Durchmesser und gewünschter Energiedichte (oder ein Muster an entsprechenden Laserspots) in der Ionenquelle auf einen für eine hohe Empfindlichkeit optimal festgelegten Ort auf dem Probenträger trifft. Die Proben, die sich auf dem Probenträger befinden, enthalten eine dünne Schicht von Kriställchen der Matrixsubstanz, in die jeweils eine geringe Menge an Analytmolekülen eingebaut ist. Die Proben werden jeweils durch eine mechanische Bewegung des Probenträgers im Fokus des Laserspots verfahren. Durch einen Lichtpuls des Lasers, üblicherweise eines UV-Pulslasers, wird eine Plasmawolke des Probenmaterials generiert, in der Ionen der Matrix- und Analytmoleküle erzeugt werden.

In modernen Ausführungen von MALDI-Lasern (siehe DE 10 2004 044 196 A1; A. Haase et al., 2004, entsprechend GB 2 421 352 B; US 7,235,781 B2) wird nicht nur ein einziger Bestrahlungsspot erzeugt, sondern gleichzeitig ein Muster aus mehreren Bestrahlungsspots, wodurch sich Spotdurchmesser und Energiedichte so optimieren lassen, dass eine zehnbis hundertfach höhere Ausbeute an Analytionen erzielt wird. Das Muster kann beispielsweise 4, 9 oder 16 Bestrahlungsspots in quadratischer Anordnung, aber auch 7 oder 19 Spots in hexagonaler Anordnung enthalten. Durch den sparsameren Verbrauch des Probenmaterials lässt sich der Nutzungsgrad der Proben erhöhen.

In der Veröffentlichung DE 10 2013 018469 A1 (A. Haase; entsprechend GB 2 521 730 A und US 2015/0122986 A1) wird ein sehr einfaches und preiswertes Verfahren zur Erzeugung von Spotmustern mit fünf oder neun Spots in quadratischer Anordnung angegeben.

Die Mustererzeugung steigert die Ionenausbeute pro Analytmolekül um weit mehr als einen Faktor 10 und verringert entsprechend den Probenverbrauch, was insbesondere für die bildgebende Massenspektrometrie an Gewebedünnschnitten wichtig ist. Da moderne Massenspektrometer auf eine Wiederholungsfrequenz der Spektrenaufnahme von 10 000 Aufnahmen pro Sekunde und mehr ausgelegt sind, kommt der Energieeffizienz der Erzeugung des Spotmusters eine hohe Bedeutung zu, wenn man den Einsatz teurer Höchstleistungslaser vermeiden möchte.

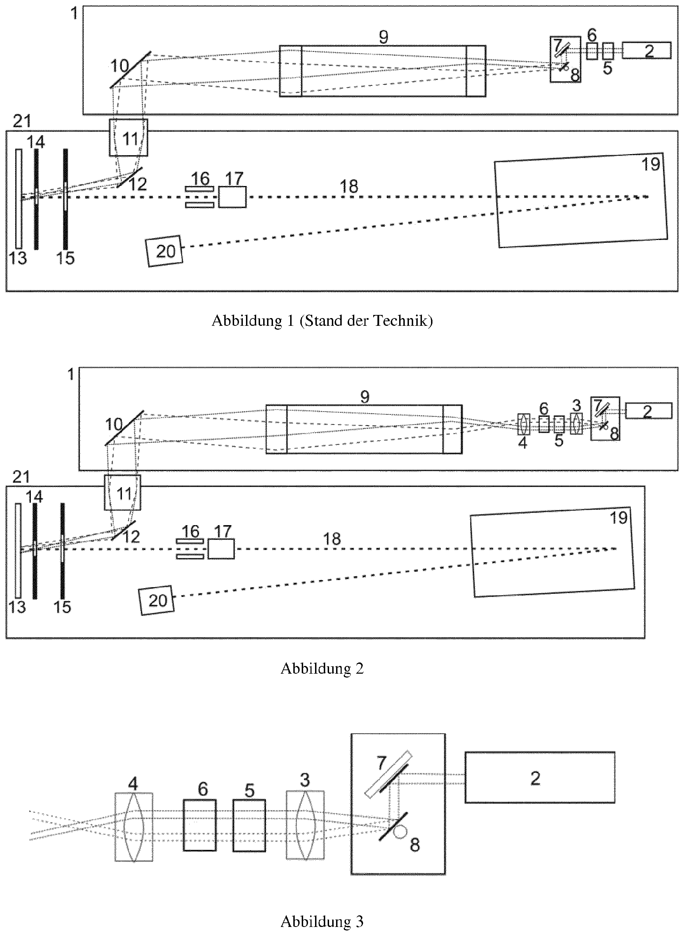

In der Patentschrift DE 10 2011 112 649 B4 (A. Haase et al.; siehe auch US 8,872,102 B2 und GB 2 495 805 A) wird ein Lasersystem für MALDI-Anwendungen vorgestellt, das eine optische Bewegung des Laserspots (oder Laserspotmusters) auf der Probe erlaubt und somit eine schnellere, trägheitsärmere Abtastung einer Probe ermöglicht, als das mit einer Bewegung der mechanisch trägen Probenträgerplatte erzielt werden kann. Die zeitlich variable Spotsteuerung beruht auf zwei kleinen trägheitsarmen Galvospiegeln, die den UV-Strahl an einer Stelle ablenken, an der der Durchmesser des UV-Strahls im Millimeterbereich liegt. Der Strahl wird dabei in zwei Raumrichtungen um winzige Winkel abgelenkt; die Ablenkung wird dann mit Hilfe eines Teleskops und einer Linse großen Durchmessers in eine Bewegung des winzigen Laserspots oder Laserspotmusters in einem quadratischen Bereich von einigen 100 µm Kantenlänge übersetzt. Die Verschiebungen der Spots können durch die schnellen Galvospiegel z.T. in weniger als 100 Mikrosekunden ausgeführt werden, in guter Übereinstimmung mit der angestrebten Laserpulsfrequenz von 10 000 Laserschüssen pro Sekunde. Die zitierte Patentschrift DE 10 2011 112 649 B4 soll hier durch Referenz vollinhaltlich eingeschlossen werden. Das Prinzip der zeitlich variablen Laserspotsteuerung ist in **Abbildung** 1 wiedergegeben.

Das in der Patentschrift DE 10 2011 112 649 B4 beschriebene Lasersystem hat eine Lebensdauer von mehreren Milliarden Laserschüssen. Bei durchgehendem Betrieb mit voller Schusskapazität entspricht das einer Lebensdauer von etwa 35 Tagen; bei achtstündigem Betrieb an fünf Tagen in der Woche beträgt die Lebensdauer etwa 150 Tage. Diese Lebensdauer lässt noch Raum für Verbesserungen. Es besteht ein Bedarf für ein Lasersystem, das eine längere, zum Beispiel die zehnfache, Lebensdauer besitzt.

Untersuchungen zeigen, dass die Lebensdauer durch eine Degradation der Vervielfacher-Kristalle beschränkt wird. Vor allem die Austrittsstelle des Verdreifacher-Kristalls leidet, weil hier der UV-Strahl unvermeidliche Ablagerungen feinster Teilchen oder organischer Moleküle an der Oberfläche zersetzt und so eine Stelle mit immer weiter zunehmender Absorption schafft. Die nur in geringsten Spuren auftretenden organischen Substanzen lassen sich prinzipiell nicht vollständig beseitigen. Es gibt allem Anschein nach sogar Mechanismen, die die feinsten Teilchen und organischen Moleküle zur Oberfläche des Verdreifacher-Kristalls wandern lassen.

Es ist bekannt, dass man die Lebensdauer dieses Verdreifacher-Kristalls erhöhen kann, indem man den Kristall parallel verschiebt, so dass der UV-Strahl, der hier nur etwa einige Hundert Mikrometer Durchmesser besitzt, immer wieder an unverbrauchten Stellen der Oberfläche austritt. Diese Parallelverschiebung erfordert grundsätzlich höchste Präzision, da bereits die kleinste Verkippung die nichtlineare Wirkung des Kristalls drastisch herabsetzt. Eine solche Verschiebungsmechanik ist aufwändig und teuer, außerdem tragen die elektromechanischen Antriebselemente beispielsweise durch Abrieb zur Verschmutzung des Umgebungsgases bei.

In der Patentschrift US 7,460,569 B2 (Van Saarlos; 2008) wird beschrieben, wie man durch eine planparallele Platte, die zur Achse geneigt um den Strahl gedreht wird, einen parallelen Versatz eines Laserstrahls erzeugen kann. Die Rotation bewirkt eine kreisende Bewegung des Strahls durch die Vervielfacher-Kristalle, die die Lebensdauer erhöht. Eine zweite drehbare planparallele Platte verschiebt den Strahl wieder in die ursprüngliche Achse.

Die Patentschrift US 8,885,246 B2 (D. Horain et al., 2009) beschreibt, wie sich durch eine zusätzliche Verkippungsbewegung der planparallelen Platten nicht nur eine kreisförmige Parallelbewegung des Laserstrahls erreichen lässt, sondern eine die ganze Fläche der Kristalle ausnutzende Abtastung. Außerdem wird beschrieben, wie die zweite Platte unabhängig von der ersten gekippt werden muss, um wegen der mit der Strahlwellenlänge veränderten Brechungsindizes den Strahl wieder genau in die ursprüngliche Achse zurückzuholen.

Die in beiden Patentschriften beschriebenen Anordnungen bedürfen wieder sehr präzise arbeitender elektromechanischer Antriebe, die wiederum das Umgebungsgas verunreinigen können. Es besteht daher für Massenspektrometer mit Laserdesorptions-Ionenquellen, insbesondere MALDI-Quellen, nach wie vor ein Bedarf für Verfahren und Vorrichtungen zur Verlängerung der Betriebsdauer des Lasersystems.

### Zusammenfassung der Erfindung

Für ein Massenspektrometer mit Laserdesorptions-Ionenquelle wird ein Lasersystem mit zeitlich variabler optischer Laserspotsteuerung vorgeschlagen, bei dem die Verschiebung des Laserspots, die durch eine Winkelablenkung in einem Spiegelsystem (zum Beispiel an zwei Galvo-Spiegeln) bewirkt wird, nicht am frequenzerhöhten Laser-Strahl nach Verlassen des Vervielfacherkristallsystems vorgenommen wird, sondern am Laser-Strahl vor oder im Zuge der Vervielfachung der Energie. Der durch die Spiegel in kleinem Winkel abgelenkte Strahl wird durch eine Planfeldoptik hoher Güte in einen parallelverschobenen Laser-Strahl verwandelt, der dann einen Vervielfacher-Kristall (beispielsweise einen Verdoppler-Kristall und einen Verdreifacher-Kristall) durchdringt. Nach dem Austritt aus diesem Vervielfacherkristallsystem wird durch eine zweite Planfeldoptik der parallel verschobene Strahl wieder in einen leicht abgewinkelten Strahl transformiert, der dann in bereits bekannter Weise die Spotverschiebung auf der Probe bewirkt. Eine gleichmäßige Abtastung der Probe führt daher automatisch zu einer gleichmäßigen Abtastung der Vervielfacher-Kristalle. Durch die Parallelverschiebung des Laser-Strahls vor oder im Vervielfacherkristallsystem verschiebt sich mit der Spotsteuerung auf der Probe auch die Austrittsstelle des frequenzerhöhten Laser-Strahls aus dem Vervielfacher-Kristall in gewünschter Weise, wodurch die Lebensdauer erhöht wird.

Die Erfindung bezieht sich daher auf Massenspektrometer (zum Beispiel für die bildgebende Massenspektrometrie), die eine Ionenquelle, welche Proben auf einem Probenträger mittels Laserdesorption ionisiert (zum Beispiel via MALDI) und zu diesem Zweck ein Lasersystem enthält, und einen Massenanalysator zum Nachweis der erzeugten Ionen aufweist. Das Lasersystem umfasst folgende Teilsysteme: a) einen Laser (zum Beispiel IR-Laser) zur Erzeugung von Laserstrahlpulsen langwelligen Lichts, b) ein Vervielfacherkristallsystem für die Erzeugung von Laserstrahlpulsen kurzwelligen Lichts aus den Laserstrahlpulsen langwelligen Lichts, c) ein Spiegelsystem für die Positionssteuerung von Laserspots auf dem Probenträger durch eine Winkelablenkung von Laserstrahlpulsen, d) eine erste Planfeldoptik nach dem Spiegelsystem für die Transformation der Winkelablenkung der Laserstrahlpulse in eine Parallelverschiebung (zum Beispiel parallel zu einer Achse des Vervielfacherkristallsystems), und e) eine zweite Planfeldoptik hinter dem Vervielfacherkristallsystem für die Rücktransformation der Parallelverschiebung in eine Winkelablenkung der Laserstrahlpulse kurzwelligen Lichts.

Das Spiegelsystem enthält bevorzugt zwei bewegliche Spiegel für die Ablenkung der Laserspots in beiden Raumrichtungen quer zur Oberfläche des Probenträgers, beispielsweise ein oder zwei Galvospiegel. Als Spiegel sind im Rahmen dieser Offenbarung grundsätzlich alle Elemente anzusehen, die Licht über Reflexion ablenken.

In verschiedenen Ausführungsformen kann zusätzlich ein Mustergenerator für die Erzeugung eines Laserspotmusters auf der Oberfläche des Probenträgers vorhanden sein.

Der Massenanalysator ist vorzugsweise ein Flugzeitanalysator mit axialem oder orthogonalem Ioneneinschuss (TOF-MS), ein Ionenzyklotronresonanz-Analysator (ICR-MS), eine Hochfrequenz-Ionenfalle (IT-MS) oder eine elektrostatische Ionenfalle vom Kingdon-Typ.

Die erste Planfeldoptik kann vor dem Vervielfacherkristallsystem angeordnet sein. In diesem Fall profitieren alle nachfolgenden Vervielfacher-Kristalle von der Laser-Strahlverschiebung und der damit einhergehenden Materialschonung.

In verschiedenen Ausführungsformen kann das Vervielfacherkristallsystem zwei (oder auch mehr) Vervielfacher-Kristalle aufweisen, beispielsweise einen Verdoppler-Kristall und einen Verdreifacher-Kristall. Der erste Vervielfacher-Kristall kann aus infrarotem kohärenten Licht sichtbares, grünes kohärentes Licht erzeugen, und der zweite Vervielfacher-Kristall kann aus dem sichtbaren, grünen kohärenten Licht und dem infraroten kohärenten Licht ultraviolettes kohärentes Licht erzeugen. In bestimmten Ausführungsformen können das Spiegelsystem und die erste Planfeldoptik zwischen den Vervielfacher-Kristallen angeordnet sein. Insbesondere die Lebensdauer eines Verdreifacher-Kristalls kann von der stetigen Laser-Strahlverschiebung profitieren, weil sich die Degradationsprozesse im Kristall mit höherer Photonenenergie verstärken.

In verschiedenen Ausführungsformen kann ein Teleskop für die Aufweitung der winkelabgelenkten Laserstrahlpulse kurzwelligen Lichts vorgesehen sein. Ferner lässt sich ein Objektiv zur Fokussierung des aufgeweiteten Laserstrahls in Laserspots auf dem Probenträger vorsehen.

Die Erfindung bezieht sich ebenfalls auf ein Verfahren zum Betrieb eines Massenspektrometers mit Laserdesorptions-Ionenquelle, dessen Lasersystem Laserstrahlpulse langwelligen Lichts erzeugt, aus denen mittels eines Vervielfacherkristallsystems Laserstrahlpulse kurzwelligen Lichts erzeugt werden, die dann zu einem Probenträger geführt werden, um dort mittels Laserdesorption Ionen zu erzeugen, die in einem Massenanalysator nachgewiesen werden, wobei ein Spiegelsystem den Laserstrahl derart winkelablenkt, dass eine Fläche auf dem Probenträger abgerastert oder abgetastet wird. Die Laserstrahlpulse durchlaufen nach dem Spiegelsystem eine erste Planfeldoptik, die die Winkelablenkung in eine Parallelverschiebung transformiert. Die Laserstrahlpulse kurzwelligen Lichts durchlaufen nach dem Vervielfacherkristallsystem eine zweite Planfeldoptik, die die Parallelverschiebung in eine Winkelablenkung zurücktransformiert.

### Kurze Beschreibung der Abbildungen

Abbildung 1 zeigt schematisch stark vereinfacht ein MALDI-Flugzeitmassenspektrometer, dessen Anordnung dem Stand der Technik entspricht.
Abbildung 2 zeigt wiederum schematisch stark vereinfacht ein Beispiel einer neuen Anordnung im Bereich vor dem Kepler-Teleskop (9). Der im Infrarot-Laser (2) generierte IR-Strahl, zum Beispiel bei 1064 Nanometern, wird vor Eintritt in die Vervielfacher-Kristalle (5) und (6) durch die beiden Galvospiegel (7) und (8) in beiden Raumrichtungen abgelenkt. Eine hochpräzise Planfeldoptik (3) transformiert den in seinem Winkel abgelenkten IR-Strahl in einen Strahl, der hier sehr genau parallel zur Achse der Vervielfacher-Kristalle (5) und (6) verläuft, aber je nach Winkel mehr oder weniger parallel verschoben ist. Der aus dem Verdreifacher-Kristall (6), *third harmonic generation* - THG, austretende UV-Strahl, beispielsweise bei 355 Nanometern, wird dann durch eine zweite Planfeldoptik (4) wieder in einen winkelabgelenkten Strahl rücktransformiert. Da im Allgemeinen die Spotsteuerung den vollen Bewegungsbereich für den Laserspot auf dem Probenträger (13) abtastet, wird durch diese Anordnung das Volumen der Vervielfacher-Kristalle (5) und (6) und besonders die Austrittsfläche aus dem Verdreifacher-Kristall (6) voll ausgenutzt; dadurch erhöht sich die Lebensdauer des Lasersystems (1).
Abbildung 3 gibt die neue exemplarische Anordnung aus Abbildung 2 vor dem Kepler-Teleskop (9) in vergrößerter Darstellung wieder.
Abbildung 4 zeigt eine alternative Anordnung der Vervielfacherkristalle (5, 6) im Verhältnis zu dem Spiegelsystem (7, 8) und den Nahfeldoptiken (3, 4).

### Detaillierte Beschreibung der Erfindung

**Abbildung 1** zeigt schematisch stark vereinfacht ein MALDI-Flugzeitmassenspektrometer mit einem Flugzeitanalysator (21) und einem Lasersystem (1), das durch ein Spiegelsystem mit zwei Galvo-Spiegeln (7, 8) eine Steuerung der Laserspotposition des Lichtpulses auf der Probenträgerplatte (13) bewirkt. Der Laserpuls wird im Infrarot-Laser (2) generiert, in einem Verdoppler-Kristall (5) energetisch verdoppelt, und in einem Verdreifacher-Kristall (6) zumindest teilweise ins UV hinein transformiert. Im Spiegelsystem wird der UV-Strahl durch zwei Galvospiegel (7) und (8) in beiden Raumrichtungen abgelenkt. Der abgelenkte Laserstrahl wird dann in einem Keplerschen Teleskop (9) aufgeweitet und gemäß der Winkelablenkung parallel verschoben. Der austretende Laserstrahl wird mit verkleinerter Winkelablenkung über den Spiegel (10) genau zentral in das Objektiv (11) gerichtet. Das Objektiv (11) wird je nach Winkelablenkung zentral, aber unter leicht verschiedenen Winkeln durchstrahlt, wodurch sich die Positionsverschiebung des Spotmusters auf der Probenträgerplatte (13) ergibt. Die in den Plasmawolken des Laserspotmusters generierten Ionen werden durch Spannungen an den Blenden (14) und (15) zu einem Ionenstrahl (18) beschleunigt, der die beiden Ablenkkondensatoren (16) und (17) zur Bahnkorrektur passiert und im Reflektor (19) auf den Detektor (20) fokussiert wird. Diese Anordnung entspricht dem Stand der Technik.

Es sei hier angemerkt, dass die Strahlführung innerhalb eines Teleskops (9) nach Kepler komplizierter ist und aus Vereinfachungsgründen von **Abbildung 1** nicht real wiedergegeben wird; die Abbildung gibt aber die Außenwirkung des Teleskops (9) auf den Laserlichtstrahl richtig wieder. Auch sind weitere optische Elemente wie beispielsweise Linsen zur Korrektur des durch thermische Linsen divergenten IR-Strahls aus dem Laser (2) und zur Erzeugung eines sehr dünnen Strahls durch die Vervielfacher-Kristalle (5, 6) nicht wiedergegeben. Diese notwendigen optischen Elemente sind dem Fachmann jedoch ohne weiteres bekannt.

Für ein Massenspektrometer mit Laserdesorptions-Ionenquelle wird nunmehr ein Lasersystem vorgeschlagen, bei dem die kontinuierlich fortschreitende Beschädigung der Austrittsfläche des Vervielfacherkristallsystems dadurch herabgesetzt wird, dass nicht einer der Kristalle in festgelegten Zeitabständen mechanisch parallel verschoben wird, um dem einfallenden Laser-Strahl unverbrauchte Austrittsstellen zu bieten, sondern dass der Laserlichtstrahl ständig optisch so parallel versetzt wird, dass die ganze Austrittsfläche des Kristalls genutzt wird. Dadurch wird auch die Verweildauer des Laserstrahls auf demselben Kristallort herabgesetzt, wodurch akkumulativ wirkende Degradations-Prozesse an einem Ort weitgehend vermieden werden. Es werden jedoch keine planparallelen Platten mit elektromechanischen Antrieben für Rotation und Kippung verwendet, sondern ein Spiegelsystem, beispielsweise aus Galvo-Spiegeln bestehend, das keine wellenlängenabhängige Veränderung der Ablenkungseigenschaften zeigt (und darüber hinaus verhältnismäßig massearm und daher trägheitsarm ist).

Wie in **Abbildung 2** beispielhaft dargestellt, wird zu diesem Zweck die Verschiebung des Laserspots, die durch eine Winkelablenkung an zwei Galvo-Spiegeln (7) und (8) bewirkt wird, nicht am UV-Strahl nach Verlassen des Verdreifacher-Kristalls (6) vorgenommen, sondern hier am Infrarot-Strahl vor der Vervielfachung der Energie. Der durch die Galvo-Spiegel (7) und (8) mit kleinen Winkeln abgelenkte IR-Strahl wird durch eine Planfeldoptik (3) hoher Güte in einen präzise zur Achse der Vervielfacher-Kristalle (5) und (6) parallelverschobenen IR-Strahl verwandelt, der dann die beiden Vervielfacher-Kristalle (5) und (6) durchdringt und dabei teilweise in seiner Quantenenergie verdreifacht wird. Nach dem Austritt aus dem Verdreifacher-Kristall (6) wird durch eine weitere Planfeldoptik (4) der parallel verschobene Strahl wieder in einen abgewinkelten Strahl verwandelt, der dann in bereits bekannter Weise die Spotverschiebung auf der Probe bewirkt.

In **Abbildung 3** wird das Prinzip der Winkelablenkung des IR-Strahls aus **Abbildung 2** vergrößert dargestellt. Es sei hier aber angemerkt, dass es sich um ein vereinfachtes Schema zur Verdeutlichung der Grundidee der Erfindung handelt. Viele Details sind hier nicht dargestellt. So ist es beispielsweise notwendig, den IR-Strahl, der durch eine thermische Linse im Austrittsspiegel des Lasers (2) divergent wird, durch eine Linse wieder zu parallelisieren. Die Planfeldoptik (3) übernimmt außerdem die Aufgabe, den Laserstrahl auf einen Durchmesser von einigen Hundert Mikrometern zu reduzieren, um eine genügend hohe Photonendichte in den Vervielfacher-Kristallen zu erzeugen. Der UV-Strahl kann schließlich auch eine Vorrichtung zur Erzeugung des Spotmusters und einen variablen Strahl-Abschwächer, der die Intensität um mehrere Zehnerpotenzen regeln kann, durchlaufen, die hier aber ebenfalls aus Gründen der Übersichtlichkeit nicht gezeigt werden.

Da die Steuerung des Laserspots auf dem Probenträger (13) für die meisten Anwendungen die ganze zur Verfügung stehende Fläche von einigen Hundert Mikrometer im Quadrat abrastert oder abtastet, wird durch die Parallelverschiebung des dünnen Infrarot-Strahls mit einigen Hundert Mikrometer Durchmesser im Verdreifacher-Kristall (6), der beispielsweise einen nutzbaren quadratischen Querschnitt mit einer Kantenlänge von etwa drei Millimetern hat, durch die Spotsteuerung auf der Probe auch die Austrittsfläche des Verdreifacher-Kristalls (6) vollkommen ausgenutzt. Die Belastung der Oberfläche durch die Zersetzung von organischen Molekülen ist damit um etwa einen Faktor zehn bis hundert herabgesetzt, wodurch die Lebensdauer entsprechend erhöht wird.

Es sei an dieser Stelle bemerkt, dass eine zusätzliche, recht simple Vorgehensweise zur Verlängerung der Lebensdauer eines Vervielfacher-Kristalls darin bestehen kann, den Kristall und damit die zur Verfügung stehende, durchstrahlbare Fläche zu vergrößern. Je größer das nutzbare Kristallvolumen ist, desto kürzer sind entsprechende Teilvolumina des Kristalls während der Abtastung oder Abrasterung den Photonen ausgesetzt.

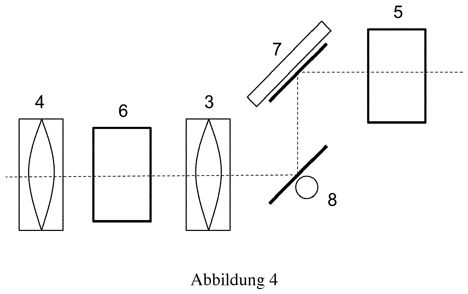

Eine Planfeldoptik ist ein besonders gut auskorrigiertes Linsensystem. Die Planfeldoptiken (3) und (4) brauchen allerdings nur für die verwendeten Wellenlängen gut korrigiert zu sein, weil chromatische Aberrationen keine Rolle spielen. Die Planfeldoptik (3) muss in dem erläuterten Beispiel also nur für Infrarot korrigiert sein, nicht für einen UV-Strahl. Befindet sich die erste Planfeldoptik (3) zwischen zwei Vervielfacher-Kristallen, beispielsweise zwischen einem Verdoppler-Kristall (5) und einem Verdreifacher-Kristall (6) wie in **Abbildung** 4 angedeutet, kann die zu korrigierende Wellenlänge beispielsweise im grünen sichtbaren (ggfs. zusätzlich im infraroten) Bereich liegen. In beiden Fällen kann man auf relativ kostengünstige Glassorten zurückgreifen. Die zweite Planfeldoptik (4) muss für die gezeigte Ausführung allerdings aus UV-durchlässigem Material, zum Beispiel Quarzglas, gefertigt, aber ebenfalls nur für diese Wellenlänge optisch korrigiert sein.

Linsen, die normalerweise erforderlich sind, um die Laserstrahlgrößen zwischen den Kristallen (5) und (6) anzupassen, sind in **Abbildung 4** aus Gründen der Übersichtlichkeit weggelassen.

Die erfindungsgemäß schnelle Abtastung der gesamten Austrittsfläche des Verdreifacher-Kristalls (6) ist der mechanischen Parallelverschiebung der Vervielfacher-Kristalle oder der Verwendung von planparallelen Platten für die Strahlverschiebung weit überlegen. Die mechanische Verschiebung, Rotation oder Verkippung ist relativ zur verwendeten Pulsrate des Lasers so langsam, dass eine Austrittsstelle bei einer Pulsrate von 10 Kilohertz vielen Laserschüssen hintereinander ausgesetzt ist. Das ist bei der vorgeschlagen schnellen optischen Rasterung anders. Durch das ständige Abrastern der gesamten Fläche kann jeder Laserschuss auf eine neue Stelle der Kristall-Austrittsfläche treffen, und jede Stelle hat eine gewisse Zeit zur Regeneration bis nach einer vollständigen Abrasterung der Gesamtfläche diese Stelle wieder an der Reihe ist und durchstrahlt wird. Beispielsweise erfordert das vollständige Abrastern oder Abtasten einer quadratischen Probenfläche mit 0,3 Millimeter Kantenlänge mit einem Muster aus neun Laserspots mit je fünf Mikrometern Durchmesser mehr als 1000 Laserschüsse; jede Austrittsstelle hat damit etwa 0,1 Sekunden Zeit zur Regeneration.

Ein weiterer wichtiger Vorteil liegt bei bestimmten Ausführungsformen in der Verwendung von Galvospiegeln im infraroten Wellenlängenbereich, zum Beispiel bei 1064 Nanometern. Hier sind die Zerstörungsgrenzen gegenüber dem UV-Wellenlängenbereich bis zu einem Faktor 10 deutlich erniedrigt. Damit kann der Laserstrahl an dieser Stelle kleiner als im UV-Bereich ausgeführt werden. Daraus resultiert die Möglichkeit, die Präzision der Ortsverschiebung auf der Probe durch die Galvospiegel etwa um einen Faktor drei zu erhöhen. Dadurch wird das Ablenksystem gegenüber äußeren Störeinflüssen wie Temperaturschwankungen toleranter.

Als Massenspektrometer kommen für die Erfindung verschiedene Arten in Betracht. Die Analytionen, die mit dem Lasersystem erzeugt werden, können vorzugsweise in einem besonderen MALDI-Flugzeitmassenspektrometer mit axialem Ioneneinschuss, wie es in den **Abbildungen 1 und 2** schematisch dargestellt ist, nachgewiesen und analysiert werden. Es ist jedoch auch möglich, die Analytionen andersartigen Massenanalysatoren zur Analyse zuzuführen, wie beispielsweise Flugzeitmassenspektrometern mit orthogonalem Ioneneinschuss (OTOF-MS), Ionenzyklotronresonanz-Massenspektrometern (ICR-MS), Hochfrequenz-Ionenfallen-Massenspektrometern (IT-MS) oder elektrostatischen Ionenfallen-Massenspektrometern vom Kingdon-Typ.

In den gezeigten Beispielen werden Vervielfacherkristallsysteme mit zwei Kristallen beschrieben. Es versteht sich jedoch, dass auch Anwendungen denkbar sind, die mit einer einstufigen oder auch mehr als zweistufigen Frequenzerhöhung der Photonenenergie arbeiten (ein Kristall, zwei Kristalle, drei Kristalle, etc.). Die Beispiele sind daher nicht als beschränkend anzusehen.

In den bisherigen Erläuterungen wurde auf MALDI Bezug genommen. Die hier aufgezeigten Prinzipien lassen sich jedoch auch mit anderen Laserdesorptions-Ionisierungsmechanismen verwirklichen, ohne die Probenmoleküle zwingend in eine Matrix einbetten zu müssen. Entsprechend breit ist die vorliegende Offenbarung diesbezüglich zu verstehen.

Neben den beispielhaft erläuterten Ausführungen sind noch weitere Ausführungsformen der Erfindung denkbar. In Kenntnis dieser Offenbarung ist es dem Fachmann ohne weiteres möglich, weitere vorteilhafte Ausformungen von Lasersystemen für Massenspektrometer zu entwerfen, die vom Schutzbereich der Patentansprüche umfasst sein sollen.

## Patentansprüche

1. Massenspektrometer aufweisend eine Ionenquelle, die Proben auf einem Probenträger (13) mittels Laserdesorption ionisiert und zu diesem Zweck ein Lasersystem (1) enthält, und einen Massenanalysator zum Nachweis der erzeugten Ionen, wobei das Lasersystem (1) folgende Teilsysteme umfasst:
a) einen Laser (2) zur Erzeugung von Laserstrahlpulsen langwelligen Lichts,
b) ein Vervielfacherkristallsystem (5, 6) für die Erzeugung von Laserstrahlpulsen kurzwelligen Lichts aus den Laserstrahlpulsen langwelligen Lichts,
c) ein Spiegelsystem (7, 8) für die Positionssteuerung von Laserspots auf dem Probenträger (13) durch eine Winkelablenkung von Laserstrahlpulsen,
**gekennzeichnet durch**
d) eine erste Planfeldoptik (3) nach dem Spiegelsystem (7, 8) und vor dem Vervielfacherkristallsystem (5, 6) für die Transformation der Winkelablenkung der Laserstrahlpulse in eine Parallelverschiebung, und
e) eine zweite Planfeldoptik (4) hinter dem Vervielfacherkristallsystem (5, 6) für die Rücktransformation der Parallelverschiebung in eine Winkelablenkung der Laserstrahlpulse kurzwelligen Lichts.

2. Massenspektrometer nach Anspruch 1, **dadurch gekennzeichnet, dass** das Spiegelsystem zwei bewegliche Spiegel (7, 8) für die Ablenkung der Laserspots in beiden Raumrichtungen quer zur Oberfläche des Probenträgers (13) enthält.

3. Massenspektrometer nach Anspruch 2, **dadurch gekennzeichnet, dass** das Spiegelsystem ein oder zwei Galvospiegel (7, 8) enthält.

4. Massenspektrometer nach einem der Ansprüche 1 bis 3, **dadurch gekennzeichnet, dass** zusätzlich ein Mustergenerator für die Erzeugung eines Laserspotmusters auf der Oberfläche des Probenträgers (13) vorhanden ist.

5. Massenspektrometer nach einem der Ansprüche 1 bis 4, **dadurch gekennzeichnet, dass** der Massenanalysator ein Flugzeitanalysator mit axialem oder orthogonalem Ioneneinschuss (TOF-MS), ein Ionenzyklotronresonanz-Analysator (ICR-MS), eine Hochfrequenz-Ionenfalle (IT-MS) oder eine elektrostatische Ionenfalle vom Kingdon-Typ ist.

6. Massenspektrometer nach einem der Ansprüche 1 bis 5, **dadurch gekennzeichnet, dass** das Vervielfacherkristallsystem zwei Vervielfacherkristalle (5, 6) aufweist.

7. Massenspektrometer nach Anspruch 6, **dadurch gekennzeichnet, dass** der erste Vervielfacher-Kristall (5) aus infrarotem kohärenten Licht sichtbares, grünes kohärentes Licht erzeugt und der zweite Vervielfacher-Kristall (6) aus dem sichtbaren, grünen kohärenten Licht und dem infraroten kohärenten Licht ultraviolettes kohärentes Licht erzeugt.

8. Massenspektrometer aufweisend eine Ionenquelle, die Proben auf einem Probenträger (13) mittels Laserdesorption ionisiert und zu diesem Zweck ein Lasersystem (1) enthält, und einen Massenanalysator zum Nachweis der erzeugten Ionen, wobei das Lasersystem (1) folgende Teilsysteme umfasst:
a) einen Laser (2) zur Erzeugung von Laserstrahlpulsen langwelligen Lichts,
b) ein Vervielfacherkristallsystem mit zwei oder mehr Vervielfacherkristallen (5, 6) für die Erzeugung von Laserstrahlpulsen kurzwelligen Lichts aus den Laserstrahlpulsen langwelligen Lichts,
c) ein Spiegelsystem (7, 8) für die Positionssteuerung von Laserspots auf dem Probenträger (13) durch eine Winkelablenkung von Laserstrahlpulsen,
**gekennzeichnet durch**
d) eine erste Planfeldoptik (3) nach dem Spiegelsystem (7, 8) für die Transformation der Winkelablenkung der Laserstrahlpulse in eine Parallelverschiebung, wobei das Spiegelsystem (7, 8) und die erste Planfeldoptik (3) zwischen den Vervielfacherkristallen (5, 6) angeordnet sind, und
e) eine zweite Planfeldoptik (4) hinter dem Vervielfacherkristallsystem (5, 6) für die Rücktransformation der Parallelverschiebung in eine Winkelablenkung der Laserstrahlpulse kurzwelligen Lichts.

9. Massenspektrometer nach einem der Ansprüche 1 bis 8, **dadurch gekennzeichnet, dass** der Laser (2) infrarote Laserlichtpulse erzeugt.

10. Massenspektrometer nach einem der Ansprüche 1 bis 9, **dadurch gekennzeichnet, dass** die Ionenquelle nach dem MALDI-Prinzip arbeitet.

11. Massenspektrometer nach einem der Ansprüche 1 bis 10, **dadurch gekennzeichnet, dass** ein Teleskop (9) für die Aufweitung der winkelabgelenkten Laserstrahlpulse kurzwelligen Lichts vorgesehen ist.

12. Massenspektrometer nach Anspruch 11, **dadurch gekennzeichnet, dass** ein Objektiv (11) zur Fokussierung des aufgeweiteten Laserlichtes in Laserspots auf dem Probenträger (13) vorgesehen ist.

13. Massenspektrometer nach einem der Ansprüche 1 bis 12, **dadurch gekennzeichnet, dass** die Parallelverschiebung parallel zu einer Achse des Vervielfacherkristallsystems (5, 6) erfolgt.

14. Verfahren zum Betrieb eines Massenspektrometers mit Laserdesorptions-Ionenquelle, dessen Lasersystem (1) Laserstrahlpulse langwelligen Lichts erzeugt, aus denen mittels eines Vervielfacherkristallsystems (5, 6) Laserstrahlpulse kurzwelligen Lichts erzeugt werden, die dann zu einem Probenträger (13) geführt werden, um dort mittels Laserdesorption Ionen zu erzeugen, die in einem Massenanalysator nachgewiesen werden, wobei ein Spiegelsystem (7, 8) die Laserstrahlpulse derart winkelablenkt, dass eine Fläche auf dem Probenträger (13) abgerastert oder abgetastet wird,
**dadurch gekennzeichnet, dass**
die Laserstrahlpulse nach dem Spiegelsystem (7, 8) eine vor dem Vervielfacherkristallsystem (5, 6) angeordnete erste Planfeldoptik (3) durchlaufen, die die Winkelablenkung in eine Parallelverschiebung transformiert, und die Laserstrahlpulse kurzwelligen Lichts nach dem Vervielfacherkristallsystem (5, 6) eine zweite Planfeldoptik (4) durchlaufen, die die Parallelverschiebung in eine Winkelablenkung zurücktransformiert.

15. Verfahren zum Betrieb eines Massenspektrometers mit Laserdesorptions-Ionenquelle, dessen Lasersystem (1) Laserstrahlpulse langwelligen Lichts erzeugt, aus denen mittels eines Vervielfacherkristallsystems mit zwei oder mehr Vervielfacherkristallen (5, 6) Laserstrahlpulse kurzwelligen Lichts erzeugt werden, die dann zu einem Probenträger (13) geführt werden, um dort mittels Laserdesorption Ionen zu erzeugen, die in einem Massenanalysator nachgewiesen werden, wobei ein Spiegelsystem (7, 8) die Laserstrahlpulse derart winkelablenkt, dass eine Fläche auf dem Probenträger (13) abgerastert oder abgetastet wird,
**dadurch gekennzeichnet, dass**
die Laserstrahlpulse nach dem Spiegelsystem (7, 8) eine erste Planfeldoptik (3) durchlaufen, die die Winkelablenkung in eine Parallelverschiebung transformiert, wobei das Spiegelsystem (7, 8) und die erste Planfeldoptik (3) zwischen den Vervielfacherkristallen (5, 6) angeordnet sind, und die Laserstrahlpulse kurzwelligen Lichts nach dem Vervielfacherkristallsystem eine zweite Planfeldoptik (4) durchlaufen, die die Parallelverschiebung in eine Winkelablenkung zurücktransformiert.

## Claims

1. A mass spectrometer comprising an ion source which ionizes samples on a sample support (13) by means of laser desorption, and for this purpose comprises a laser system (1), and a mass analyzer to detect the ions produced, where the laser system (1) comprises the following subsystems:
a) a laser (2) to generate laser beam pulses of long-wavelength light,
b) a multiplier crystal system (5, 6) to generate laser beam pulses of short-wavelength light from the laser beam pulses of long-wavelength light,
c) a mirror system (7, 8) for the position control of laser spots on the sample support (13) by means of an angular deflection of laser beam pulses,
**characterized by**
d) a first flat-field optical system (3) behind the mirror system (7, 8) and in front of the multiplier crystal system (5, 6) to transform the angular deflection of the laser beam pulses into a parallel shift, and
e) a second flat-field optical system (4) behind the multiplier crystal system (5, 6) to transform the parallel shift back into an angular deflection of the laser beam pulses of short-wavelength light.

2. The mass spectrometer according to Claim 1, **characterized in that** the mirror system contains two movable mirrors (7, 8) to deflect the laser spots in both spatial directions across a surface of the sample support (13).

3. The mass spectrometer according to Claim 2, **characterized in that** the mirror system contains one or two galvanometer mirrors (7, 8).

4. The mass spectrometer according to any one of the Claims 1 to 3, **characterized in that** a pattern generator to generate a laser spot pattern on a surface of the sample support (13) is present.

5. The mass spectrometer according to any one of the Claims 1 to 4, **characterized in that** the mass analyzer is a time-of-flight analyzer with axial or orthogonal ion injection (TOF-MS), an ion-cyclotron-resonance analyzer (ICR-MS), a radio-frequency voltage ion trap (IT-MS) or an electrostatic ion trap of the Kingdon type.

6. The mass spectrometer according to any one of the Claims 1 to 5, **characterized in that** the multiplier crystal system has two multiplier crystals (5, 6).

7. The mass spectrometer according to Claim 6, **characterized in that** the first multiplier crystal (5) produces visible green coherent light from infrared coherent light, and the second multiplier crystal (6) produces ultraviolet coherent light from the visible, green coherent light and the infrared coherent light.

8. A mass spectrometer comprising an ion source which ionizes samples on a sample support (13) by means of laser desorption, and for this purpose comprises a laser system (1), and a mass analyzer to detect the ions produced, where the laser system (1) comprises the following subsystems:
a) a laser (2) to generate laser beam pulses of long-wavelength light,
b) a multiplier crystal system having two or more multiplier crystals (5, 6) to generate laser beam pulses of short-wavelength light from the laser beam pulses of long-wavelength light,
c) a mirror system (7, 8) for the position control of laser spots on the sample support (13) by means of an angular deflection of laser beam pulses,
**characterized by**
d) a first flat-field optical system (3) behind the mirror system (7, 8) to transform the angular deflection of the laser beam pulses into a parallel shift, wherein the mirror system (7, 8) and the first flat-field optical system (3) are positioned between the multiplier crystals (5, 6), and
e) a second flat-field optical system (4) behind the multiplier crystal system (5, 6) to transform the parallel shift back into an angular deflection of the laser beam pulses of short-wavelength light.

9. The mass spectrometer according to any one of the Claims 1 to 8, **characterized in that** the laser (2) produces infrared laser light pulses.

10. The mass spectrometer according to any one of the Claims 1 to 9, **characterized in that** the ion source operates according to the MALDI principle.

11. The mass spectrometer according to any one of the Claims 1 to 10, **characterized in that** a telescope (9) to expand the angularly deflected laser beam pulses of short-wavelength light is foreseen.

12. The mass spectrometer according to Claim 11, **characterized in that** an object lens (11) to focus the expanded laser light in laser spots on the sample support (13) is foreseen.

13. The mass spectrometer according to any one of the Claims 1 to 12, **characterized in that** the parallel shift is executed parallel to an axis of the multiplier crystal system (5, 6).

14. A method for the operation of a mass spectrometer with laser desorption ion source, whose laser system (1) generates laser beam pulses of long-wavelength light, which a multiplier crystal system (5, 6) then transforms into laser beam pulses of short-wavelength light, which are then guided to a sample support (13) in order to generate ions there by means of laser desorption, said ions being detected in a mass analyzer, wherein a mirror system (7, 8) deflects the laser beam pulses at an angle such that an area on the sample support (13) is scanned or sampled,
**characterized in that**
the laser beam pulses pass, downstream of the mirror system (7, 8), through a first flat-field optical system (3), which is positioned in front of the multiplier crystal system (5, 6) and transforms the angular deflection into a parallel shift, and the laser beam pulses of short-wavelength light pass, downstream of the multiplier crystal system (5, 6) through a second flat-field optical system (4), which transforms the parallel shift back into an angular deflection.

15. A method for the operation of a mass spectrometer with laser desorption ion source, whose laser system (1) generates laser beam pulses of long-wavelength light, which a multiplier crystal system having two or more multiplier crystals (5, 6) then transforms into laser beam pulses of short-wavelength light, which are then guided to a sample support (13) in order to generate ions there by means of laser desorption, said ions being detected in a mass analyzer, wherein a mirror system (7, 8) deflects the laser beam pulses at an angle such that an area on the sample support (13) is scanned or sampled,
**characterized in that**
the laser beam pulses pass, downstream of the mirror system (7, 8), through a first flat-field optical system (3), which transforms the angular deflection into a parallel shift, wherein the mirror system (7, 8) and the first flat-field optical system (3) are positioned between the multiplier crystals (5, 6), and the laser beam pulses of short-wavelength light pass, downstream of the multiplier crystal system through a second flat-field optical system (4), which transforms the parallel shift back into an angular deflection.

## Revendications

1. Spectromètre de masse comprenant une source d'ions qui ionise des échantillons sur un support d'échantillon (13) au moyen d'une désorption laser, et qui comprend à cet effet un système laser (1), et un analyseur de masse pour détecter les ions produits, où le système laser (1) comprend les sous-systèmes suivants :
a) un laser (2) pour générer des impulsions de rayon laser de lumière de grande longueur d'onde,
b) un système de cristaux multiplicateurs (5, 6) pour générer des impulsions de rayon laser de lumière de courte longueur d'onde à partir des impulsions de rayon laser de lumière de longue longueur d'onde,
c) un système de miroir (7, 8) pour le contrôle de la position des spots laser sur le support d'échantillon (13) au moyen d'une déviation angulaire des impulsions du faisceau laser,
**caractérisé par**
d) un premier système optique à champ plat (3) derrière le système de miroirs (7, 8) et devant le système de cristaux multiplicateurs (5, 6) pour transformer la déviation angulaire des impulsions du faisceau laser en un décalage parallèle, et
e) un second système optique à champ plat (4) derrière le système de cristaux multiplicateurs (5, 6) pour transformer le décalage parallèle en retour en une déviation angulaire des impulsions du faisceau laser de lumière de courte longueur d'onde.

2. Spectromètre de masse selon la revendication 1, **caractérisé en ce que** le système de miroirs contient deux miroirs mobiles (7, 8) pour dévier les spots laser dans les deux directions spatiales sur une surface du support d'échantillon (13).

3. Spectromètre de masse selon la revendication 2, **caractérisé en ce que** le système de miroirs contient un ou deux miroirs galvanométriques (7, 8).

4. Spectromètre de masse selon l'une quelconque des revendications 1 à 3, **caractérisé en ce qu'**un générateur de motifs pour générer un motif des spots laser sur une surface du support d'échantillon (13) est présent.

5. Spectromètre de masse selon l'une quelconque des revendications 1 à 4, **caractérisé en ce que** l'analyseur de masse est un analyseur à temps de vol avec injection axiale ou orthogonale d'ions (TOF-MS), un analyseur à résonance cyclotronique d'ions (ICR-MS), un piège à ions à tension de radiofréquence (IT-MS) ou un piège à ions électrostatique du type Kingdon.

6. Spectromètre de masse selon l'une quelconque des revendications 1 à 5, **caractérisé en ce que** le système de cristaux multiplicateurs comporte deux cristaux multiplicateurs (5, 6).

7. Spectromètre de masse selon la revendication 6, **caractérisé en ce que** le premier cristal multiplicateur (5) produit de la lumière cohérente verte visible à partir de la lumière cohérente infrarouge, et le second cristal multiplicateur (6) produit de la lumière cohérente ultraviolette à partir de la lumière cohérente verte visible et de la lumière cohérente infrarouge.

8. Spectromètre de masse comprenant une source d'ions qui ionise des échantillons sur un support d'échantillon (13) au moyen d'une désorption laser, et comprend à cet effet un système laser (1), et un analyseur de masse pour détecter les ions produits, où le système laser (1) comprend les sous-systèmes suivants :
a) un laser (2) pour générer des impulsions de rayon laser de lumière de grande longueur d'onde,
b) un système de cristaux multiplicateurs comportant deux ou plusieurs cristaux multiplicateurs (5, 6) pour générer des impulsions de faisceau laser de lumière de courte longueur d'onde à partir des impulsions de faisceau laser de lumière de longue longueur d'onde,
c) un système de miroir (7, 8) pour le contrôle de la position des spots laser sur le support d'échantillon (13) au moyen d'une déviation angulaire des impulsions du faisceau laser,
**caractérisé par**
d) un premier système optique à champ plat (3) derrière le système de miroir (7, 8) pour transformer la déviation angulaire des impulsions du faisceau laser en un décalage parallèle, dans lequel le système de miroir (7, 8) et le premier système optique à champ plat (3) sont positionnés entre les cristaux multiplicateurs (5, 6), et
e) un second système optique à champ plat (4) derrière le système de cristaux multiplicateurs (5, 6) pour transformer le décalage parallèle en retour en une déviation angulaire des impulsions du faisceau laser de lumière de courte longueur d'onde.

9. Spectromètre de masse selon l'une quelconque des revendications 1 à 8, **caractérisé en ce que** le laser (2) produit des impulsions de lumière laser infrarouge.

10. Spectromètre de masse selon l'une quelconque des revendications 1 à 9, **caractérisé en ce que** la source d'ions fonctionne selon le principe MALDI.

11. Spectromètre de masse selon l'une des revendications 1 à 10, **caractérisé en ce qu'**il est prévu un télescope (9) pour élargir les impulsions du faisceau laser dévié angulairement de la lumière de courte longueur d'onde.

12. Spectromètre de masse selon la revendication 11, **caractérisé en ce qu'**il est prévu une lentille d'objet (11) pour focaliser la lumière laser élargie en spots laser sur le support d'échantillon (13).

13. Spectromètre de masse selon l'une quelconque des revendications 1 à 12, **caractérisé en ce que** le décalage parallèle est exécuté parallèlement à un axe du système de cristaux multiplicateurs (5, 6).

14. Procédé pour faire fonctionner un spectromètre de masse avec une source d'ions à désorption laser, dont le système laser (1) génère des impulsions de rayon laser de lumière de grande longueur d'onde, qu'un système de cristaux multiplicateurs (5, 6) transforme ensuite en impulsions de rayon laser de lumière de courte longueur d'onde, qui sont ensuite guidés vers un support d'échantillon (13) afin d'y générer des ions au moyen d'une désorption laser, lesdits ions étant détectés dans un analyseur de masse, dans lequel un système de miroirs (7, 8) dévie les impulsions du faisceau laser selon un angle tel qu'une zone du support d'échantillon (13) est balayée ou échantillonnée,
**caractérisé en ce que**
les impulsions du faisceau laser passent, en aval du système de miroirs (7, 8), par un premier système optique à champ plat (3), qui est placé devant le système de cristaux multiplicateurs (5, 6) et transforme la déviation angulaire en un décalage parallèle, et les impulsions du faisceau laser de lumière de courte longueur d'onde passent, en aval du système de cristaux multiplicateurs (5, 6), par un deuxième système optique à champ plat (4), qui transforme le décalage parallèle en retour en une déviation angulaire.

15. Procédé pour faire fonctionner un spectromètre de masse avec une source d'ions à désorption laser, dont le système laser (1) génère des impulsions de faisceau laser de lumière de grande longueur d'onde, qu'un système de cristaux multiplicateurs ayant deux ou plusieurs cristaux multiplicateurs (5, 6) transforme ensuite en impulsions de faisceau laser de lumière de courte longueur d'onde, qui sont ensuite guidés vers un support d'échantillon (13) afin d'y générer des ions au moyen d'une désorption laser, lesdits ions étant détectés dans un analyseur de masse, dans lequel un système de miroirs (7, 8) dévie les impulsions du faisceau laser selon un angle tel qu'une zone du support d'échantillon (13) est balayée ou échantillonnée,
**caractérisé en ce que**
les impulsions du faisceau laser passent, en aval du système de miroirs (7, 8), par un premier système optique à champ plat (3), qui transforme la déviation angulaire en un décalage parallèle, dans lequel le système de miroirs (7, 8) et le premier système optique à champ plat (3) sont positionnés entre les cristaux multiplicateurs (5, 6), et les impulsions du faisceau laser de lumière de courte longueur d'onde passent, en aval du système de cristaux multiplicateurs, par un deuxième système optique à champ plat (4), qui transforme le décalage parallèle en retour en une déviation angulaire.
